# EUROPEAN PATENT SPECIFICATION

(11) **EP 0 552 957 B1**
(45) Date of publication and mention of the grant of the patent: **06.05.1998**
(21) Application number: 93300433.5
(22) Date of filing: 21.01.1993
(51) Int. Cl.: G11B 11/10

(54) **Magneto-optical recording medium and manufacturing method thereof**
Magnetooptisches Aufzeichnungsmedium und Verfahren zu seiner Herstellung
Milieu d'enregistrement magnéto-optique et procédé pour sa fabrication

(30) Priority: 21.01.1992 JP 8498/92
(43) Date of publication of application: 28.07.1993
(73) Proprietor: SHARP KABUSHIKI KAISHA, Osaka-shi, Osaka-fu 545 (JP)
(72) Inventor: Nakayama, Junichiro, Shiki-gun, Nara 636-03 (JP); Katayama, Hiroyuki, Nara-shi, Nara 631 (JP); Hirokane, Junji, Nara-shi, Nara 630 (JP); Mieda, Michinobu, Shiki-gun, Nara 636-03 (JP)
(74) Representative: Brown, Kenneth Richard

(56) References cited:
- EP-A- 0 282 356
- EP-A- 0 352 548
- PATENT ABSTRACTS OF JAPAN vol. 13, no. 424 (P-934)21 September 1989 & JP-A-11 55 534
- JOURNAL OF APPLIED PHYSICS vol. 70, no. 10, 15 November 1991, NEW YORK pages 6439 - 6441 T.K.HATWAR AND D.G.STINSON 'Control of Exchange Coupling for Direct Overwrite Media using Pd Metal Interlayer'
- JAPANESE JOURNAL OF APPLIED PHYSICS vol. 28, no. 3, 1989, pages 27 - 31 M. KANEKO, K. ARATANI, Y. MUTOH, A. NAKAOKI, K. WATANABE AND H. MAKINO 'The Interface Wall Structure of Magnetic Triple-Layer Film for Overwriting by Light Intensity Modulation'
- PATENT ABSTRACTS OF JAPAN vol. 15, no. 144 (P-1189)11 April 1991 & JP-A-30 19 155
- PATENT ABSTRACTS OF JAPAN vol. 16, no. 527 (P-1447)29 October 1992 & JP-A-41 95 750

## Description

### FIELD OF THE INVENTION

The present invention relates to a magneto-optical recording medium such as an optical disk or an optical card and a manufacturing method thereof, the magneto-optical recording medium being designed such that information recorded thereon is to be reproduced utilizing a magneto-optical effect.

### BACKGROUND OF THE INVENTION

When a magneto-optical recording method is adopted, a recording medium is employed which includes a substrate having thereon a perpendicular magnetic film made of a magnetic substance, and recording and reproducing operations on and from the recording medium are performed in the following way.

When a recording operation is to be carried out, first, the magnetization direction of the recording medium is arranged in one direction (upward or downward) by applying thereto a strong external magnetic field, thereby initializing the recording medium. Next, a laser beam is projected onto a recording area of the recording medium so as to raise a temperature thereof above the vicinity of its Curie temperature or above the vicinity of its compensation temperature. As a result, a coercive force (Hc) at the heated portion becomes zero or substantially zero. Further, an external magnetic field (bias magnetic field) having an opposite direction to an initialization magnetic direction is applied, thereby reversing the magnetization direction. Then, the projection of the laser beam is stopped. As the temperature of the recording medium drops to a room temperature, the reversed magnetization direction is fixed, thereby recording information thermomagnetically.

When a reproducing operation is to be carried out, a linearly polarized laser beam is projected onto the recording medium, and the recorded information is optically read out utilizing an effect that the polarization plane of the reflected light or the transmitted light rotates differently according to the magnetization direction (magnetic Kerr effect, or magnetic Faraday effect).

The magneto-optical recording medium designed for the magneto-optical recording method has been viewed with interest as a rewritable high density and large capacity memory device. In order to rewrite on the magneto-optical recording medium, either one of the following methods (a), (b), and (c) is required.
(a) initializing through any method,
(b) devising an external magnetic field (bias magnetic field) generation device so as to enable the overwriting operation (rewrite without requiring an erasing operation), and
(c) devising the recording medium so as to enable the overwriting operation (rewrite without requiring an erasing operation).

However, when the method (a) is adopted, either an initialization device is required, or two magnetic heads are required which increase a manufacturing cost. Or when erasing using only one magnetic head, there arises the problem that the erasing operation requires the same amount of time required for recording. On the other hand, when the method (b) is adopted, the magnetic head may be crashed as in the case of the magnetic recording.

Thus, the method (c) of devising the recording medium is the most effective method. As for this method, by employing a double-layered exchange coupled film for a recording layer, the overwriting operation is enabled which has been reported by Akasaka et al (for example, see Jap. Jour. Appl. Phys., Vol.28(1989) Suppl. 28-3, pp.367-370).

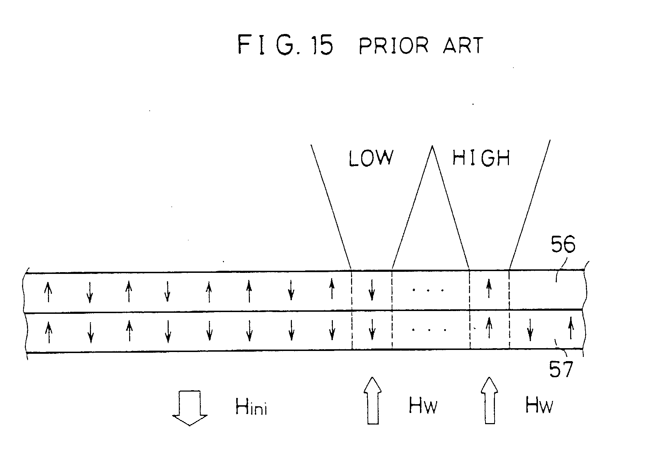

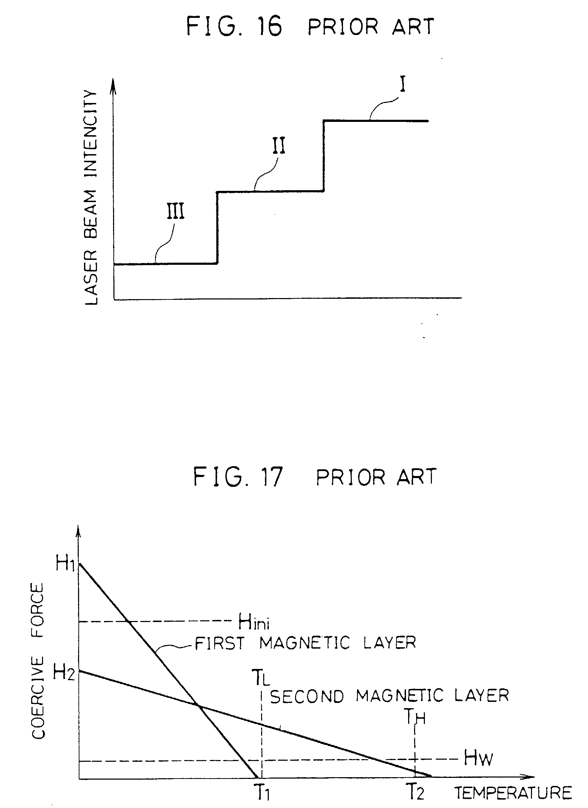

The processes for the overwriting operation will be briefly described below. As shown in Fig. 15, in the magneto-optical recording medium composed of a first magnetic layer 56 and a second magnetic layer 57, an initialization magnetic field Hᵢₙᵢ is applied thereto so as to arrange the magnetization of the second magnetic layer 57 in one direction (downward in the figure) in order to initialize the recording medium. Here, the initialization may always be performed or performed only when recording. In this state, since a coercive force H₁ of the first magnetic layer 56 is greater than the initialization magnetic field Hᵢₙᵢ, the magnetization of the first magnetic layer 56 need not be reversed as shown in Fig. 17.

A recording operation is performed by projecting a laser light which is to be switched between high level and low level, while applying a recording magnetic field H_{w}. In more detail, a laser beam of high level denoted by I in Fig. 16 is set so as to raise both the temperatures of the first magnetic layer 56 and the second magnetic layer 57 to the temperature T_{H} which is the vicinity of the Curie temperature T₂ or above the Curie temperature T₂. On the other hand, a laser beam of low level denoted by II in Fig. 16 is set so as to raise only the temperature of the first magnetic layer 56 to the temperature T_{L} which is the vicinity of its Curie temperature T₁ or above the Curie temperature T₁

Therefore, when projecting the laser beam of high level, the magnetization of the second magnetic layer 57 is reversed (upward in Fig. 15) by applying thereto the recording magnetic field H_{w}. Then, the magnetization of the first magnetic layer 56 is also reversed in the direction of the second magnetic layer 57 using an exchange force exerted on an interface in the process of cooling off.

On the other hand, when projecting the laser beam of low level, the magnetization of the second magnetic layer 57 is not reversed by the recording magnetic field H_{w}. In this case also, the magnetization direction of the first magnetic layer 56 is arranged in the magnetization direction of the second magnetic layer 57 in the process of cooling off. Thus, the magnetization direction of the first magnetic layer 56 is downward in Fig. 15. Additionally, the recording magnetic field H_{w} is set substantially smaller than the initialization magnetic field Hᵢₙᵢ as shown in Fig. 17. Furthermore, as denoted by III of Fig. 16, the intensity of the laser beam used for reproducing is set substantially lower than the laser beam used for recording.

However, when the above method is adopted, a large initialization magnetic field is required. Or if a double-layered film which makes the initialization magnetic field smaller, a stable recording operation cannot be performed, thus the overwriting operation is not permitted. In order to counteract this, a three-layered recording layer may be adopted having an intermediate layer between two exchange coupled films (for example, see Jap. Jour. Appl. Phys., Vol. 28 (1989) Suppl. 28-3, pp.27-31). However, the three-layered recording layer requires a higher manufacturing cost and longer manufacturing process.

EP-A-0 352 548 relates to a thermomagnetic recording medium comprising a first and a second magnetic thin film having perpendicular anisotropy and a third magnetic film having in-plane magnetic anisotropy or small perpendicular magnetic anisotropy interposed therebetween, formed into a laminated structure.

### SUMMARY OF THE INVENTION

An object of the present invention is to provide a magneto-optical recording medium, which permits a stable recording operation using a small initialization magnetic field even when adopting a double-layered recording layer.

In order to achieve the above object, the magneto-optical recording medium is characterized by having a recording layer comprising first and second magnetic layers, and satisfying a condition of |A₁·K₁ - A₂·K₂| ≤ 0.063 (erg²/cm⁴) wherein A₁, K₁, A₂, and K₂ respectively represent an exchange constant of the first magnetic layer, a perpendicular magnetic anisotropy of the first magnetic layer, an exchange constant of the second magnetic layer, and a perpendicular magnetic anisotropy of the second magnetic layer.

According to the above arrangement, even when the applied magnetic field becomes zero, the Faraday rotation angle of the recording layer will not change. For example, the applied magnetic field may become zero by a shift of the magnetic field after the recording operation has been completed. However, since the recorded information is maintained in a stable condition without being changed, a stable recording operation of the information can be achieved even with the double-layered recording layer. The initialization magnetic field thus can be made smaller.

Preferably, the first and second magnetic layers satisfy the condition of |A₁·K₁ - A₂·K₂| ≤0.060.

For a fuller understanding of the nature and advantages of the invention, reference should be made to the ensuing detailed description taken in conjunction with the accompanying drawings.

### BRIEF DESCRIPTION OF THE DRAWINGS

Figs. 1 through 14 show an embodiment of the present invention.

Fig. 1 shows a cross-sectional view showing the configuration of a magneto-optical recording medium.

Fig. 2 is a graph showing a perpendicular magnetic anisotropy with respect to Tb contained in TbFeCo.

Fig. 3 is a graph showing an exchange constant with respect to Co contained in TbFeCo.

Fig. 4 is a graph showing a Faraday loop in a magneto-optical recording medium.

Fig. 5 is a graph showing a Faraday loop in a magneto-optical recording medium satisfying a condition of |A₁·K₁ - A₂·K₂| = 2.0 (erg²/cm⁴).

Fig. 6 is a graph showing a Kerr loop in the magneto-optical recording medium.

Fig. 7 is an explanatory view of a device used in a method for manufacturing a magneto-optical recording medium, which shows the case where the first or the second magnetic layers are formed by sputtering.

Fig. 8 is an explanatory view of a device used in a method for manufacturing a magneto-optical recording medium, which shows the case where a dielectric layer is formed by sputtering.

Fig. 9 is an explanatory view of a device used in a method for manufacturing a magneto-optical recording medium, which shows a reverse sputtering operation of the first magnetic layer.

Fig. 10 is a cross-sectional view of a measured sample which clarifies an effect of a reverse sputtering operation.

Fig. 11 is a graph showing a Kerr loop in the case where a magnetic layer of the measured sample is the first magnetic layer of a single layer.

Fig. 12 is a graph showing a Kerr loop in the case where a magnetic layer of the measured sample is the second magnetic layer of a single layer.

Fig. 13 is a cross-sectional view of the magneto-optical recording medium manufactured through the method of the present invention without carrying out the reverse sputtering operation.

Fig. 14 is an explanatory view showing a coercive force dependency on a magnetic Kerr rotation angle in the magneto-optical recording medium.

Figs. 15 through 17 show prior art.

Fig. 15 is a cross-sectional view showing the configuration of a magneto-optical recording medium.

Fig. 16 is an explanatory view showing a change in a light beam intensity.

Fig. 17 is a graph showing the relationship between a temperature and a coercive force of a magnetic layer.

### DESCRIPTION OF THE EMBODIMENTS

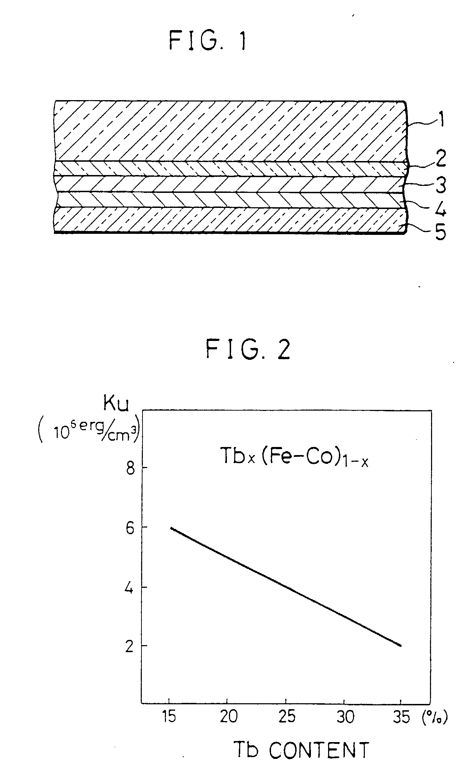

The following description will discuss an embodiment of the present invention with reference to Figs. 1 through 14.

As shown in Fig. 1, a magneto-optical recording medium is composed of a substrate 1, having a property that light can be transmitted therethrough, made of glass having thereon a dielectric layer 2 made of AℓN having a property that light can be transmitted therethrough, a first magnetic layer 3 made of TbFeCo, a second magnetic layer 4 made of TbFeCo, and a protective layer 5 made of AℓN laminated in this order.

The magneto-optical recording medium is manufactured by forming each layer by sputtering on the transparent substrate 1 which has a property that light can be transmitted therethrough. Additionally, the film thickness of the dielectric layer 2, the first and the second magnetic layers 3 and 4, and the protective layer 5 are respectively 80 nm, 50 nm, and 80 nm.

A coating layer made of a resin of an acrylate family of a ultraviolet hardening resin (not shown in Fig. 1) is formed on the protective film 5.

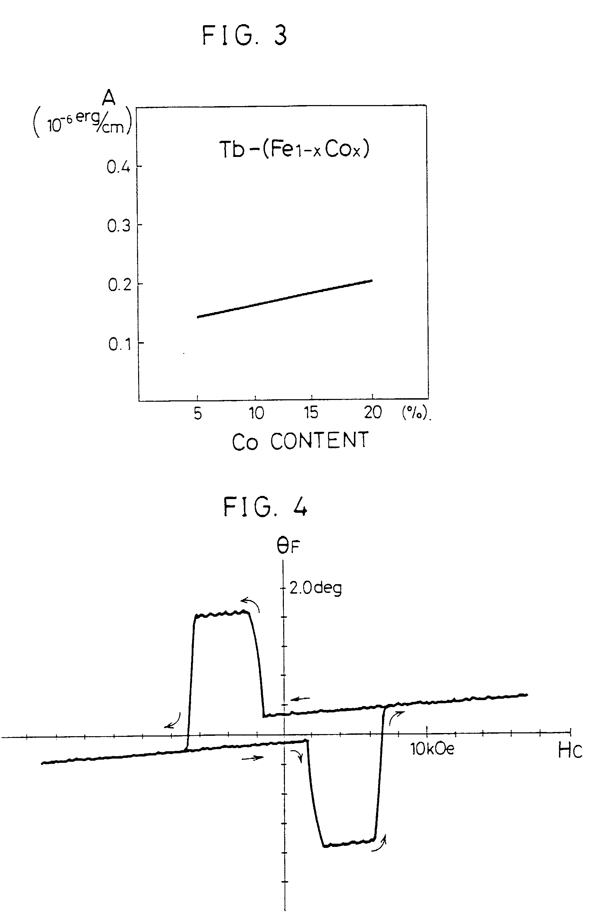

The compositions of TbFeCo for the first magnetic layer 3 and the second magnetic layer 4 are respectively Tb₁₈Fe₇₇Co₅ and Tb₂₅Fe₆₁Co₁₄. As shown in Figs. 2 and 3, the first magnetic layer 3 satisfies that A₁ (exchange constant) = 0.145 × 10⁻⁶ (erg/cm), and K₁ (perpendicular magnetic anisotropy) = 5.4 4 × 10⁶ (erg/cm³). The second magnetic layer 4 satisfies that A₂ (exchange constant) = 0.18 × 10⁻⁶ (erg/cm), and K₂ (perpendicular magnetic anisotropy) = 4.0 × 10⁶ (erg/cm³). Thus, |A₁·K₁ - A₂·K₂| = 0.06 (erg²/cm⁴), or more precisely, 0.063 (erg²/cm⁴).

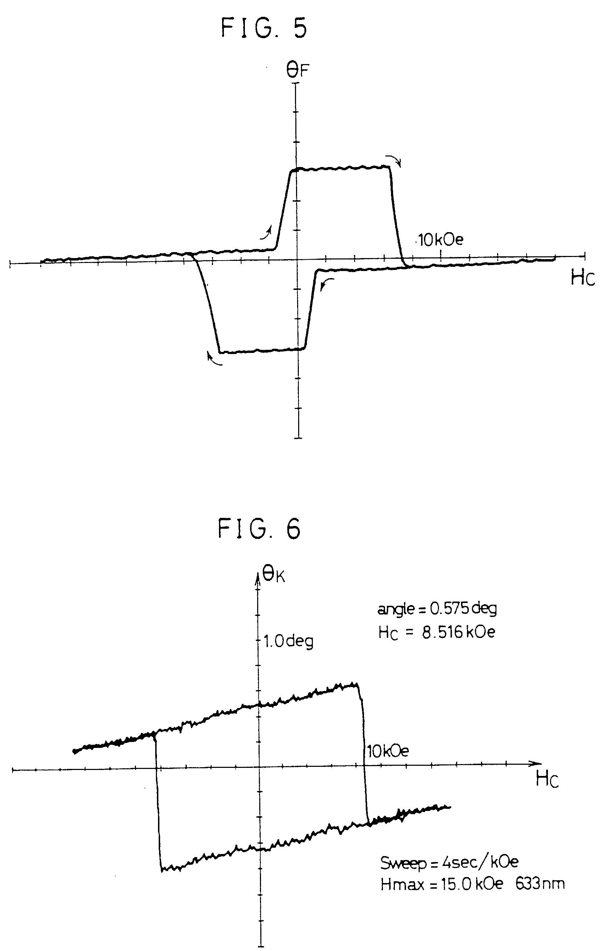

Fig. 4 is a graph showing a Faraday loop in a magneto-optical recording medium which satisfies a condition of |A₁·K₁ - A₂·K₂| = 0.06 (erg²/cm⁴) wherein a horizontal axis indicates an application magnetic field, a vertical axis indicates a Faraday rotation angle, and an arrow shows a direction of the loop. Fig. 5, which shows a comparison example, is a graph showing a Faraday loop in a magneto-optical recording medium which satisfies a condition of |A₁·K₁ - A₂·K₂| = 2.0 (erg²/cm⁴). As can be seen from the figures, for example, in the magneto-optical recording medium used in the comparison example, when the direction of the magnetic field to be applied is changed from minus direction to plus direction, the Faraday rotation angle is changed significantly when the applied magnetic field becomes close to zero. On the other hand, in the magneto-optical recording medium of the present invention, the Faraday rotation angle is not changed even when the applied magnetic field becomes close to zero, and it is significantly changed only after the applied magnetic field shows the plus direction. Namely, in the magneto-optical recording medium used in the comparison example, when the magnetic field becomes zero by the shift of the applied magnetic field, the information recorded thereon is erased. For this reason, a stable recording operation cannot be achieved. On the other hand, in the magneto-optical recording medium of the present invention, the information recorded by applying the magnetic field is not erased even when the applied magnetic field becomes zero. As a result, a stable recording operation can be achieved.

Additionally, the above configuration and the material of the magneto-optical recording medium of the present embodiment merely shows an example of the present invention. Thus, the configuration and the material to be used are not specified as long as the magneto-optical recording medium has the recording layer including at least two layers which satisfies a condition of |A₁·K₁ - A₂·K₂| ≤ 0.063 (erg²/cm⁴).

As described, the magneto-optical recording medium in accordance with the present invention has a recording layer including at least two magnetic layers. The magneto-optical recording medium is characterized by satisfying the condition of |A₁·K₁ - A₂·K₂| ≤ 0.063 (erg²/cm⁴) wherein A₁, K₁, A₂, and K₂ respectively represent an exchange constant of the first magnetic layer, a perpendicular magnetic anisotropy of the first magnetic layer, an exchange constant of the second magnetic layer, and a perpendicular magnetic anisotropy of the second magnetic layer.

According to the above arrangement, even when the applied magnetic field becomes zero, the Faraday rotation angle of the recording layer will not change. For example, the applied magnetic field may become zero by a shift of the magnetic field after the recording operation has been completed. However, since the recorded information is maintained in a stable condition without being changed, a stable recording operation of the information can be achieved even with the double-layered recording layer. The initialization magnetic field thus can be made smaller.

A method for manufacturing the magneto-optical recording medium will be described below. The magneto-optical recording medium employed in the present embodiment does not satisfy the condition of |A₁·K₁ - A₂·K₂| ≤ 0.063 (erg²/cm⁴). However, the method is also applicable to the magneto-optical recording medium which satisfies the above condition.

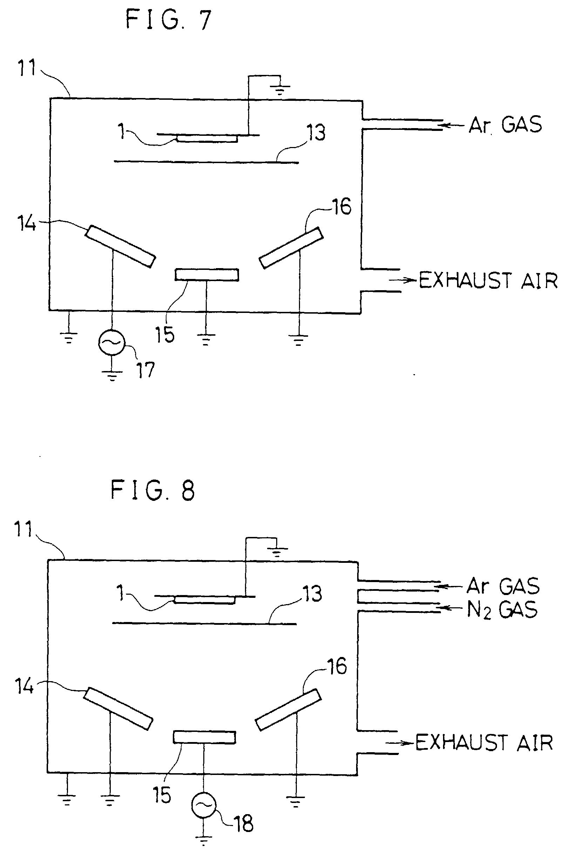

With the manufacturing method of the present embodiment, the substrate 1 having a property that light can be transmitted therethrough, the dielectric layer 2, the first magnetic layer 3, the second magnetic layer 4, and the protective layer 5 are laminated in this order by sputtering. The sputtering operation is carried out, for example, in the devices shown in Figs. 7 through 9.

First, for example AℓN with a thickness of 80 mm (dielectric film 2) is formed by a sputtering operation on the substrate 1 made of polycarbonate having a property that light can be transmitted therethrough. In more detail, a high frequency power supply 18 is connected to an Al target 15, and sputtering is carried out in the chamber 11 wherein Ar gas of discharge gas and N₂ gas of active gas (mixed gas with the ratio Ar : N₂ = 4 : 1) were introduced as shown in Fig. 8. As a result, the AℓN (compound thin film) is formed on the substrate 1 having a property that light can be transmitted therethrough. Additionally, the sputtering operation of the AℓN is carried out under the following conditions: gas pressure of 8 mTorr, application power of 1 kW, and sputtering time of 4 minutes. Additionally, a shutter 13 is provided for preventing an unnecessary film from being formed on the substrate 1 having a property that light can be transmitted therethrough.

Thereafter, for example, Tb_{0.18}Fe_{0.72}Co_{0.10} with a thickness of 50 nm (the first magnetic layer 3) is formed in the chamber 11 by a sputtering operation as an amorphous rare earth elements - transition-metal alloy film.

In more detail, as shown in Fig. 7, a high frequency power supply 17 is connected to a Tb_{0.18}Fe_{0.72}Co_{0.10} target 14, and sputtering is carried out in the chamber 11 wherein the Ar gas (discharge gas) was introduced. As a result, Tb_{0.18}Fe_{0.72}2Co_{0.10} is formed on the dielectric layer 2. The sputtering conditions are as listed below: gas pressure of 9 mTorr, application power of 1 kW, and sputtering time of 90 seconds.

Next, a reverse sputtering (etching) operation is carried out in the following way on the first magnetic layer 3.

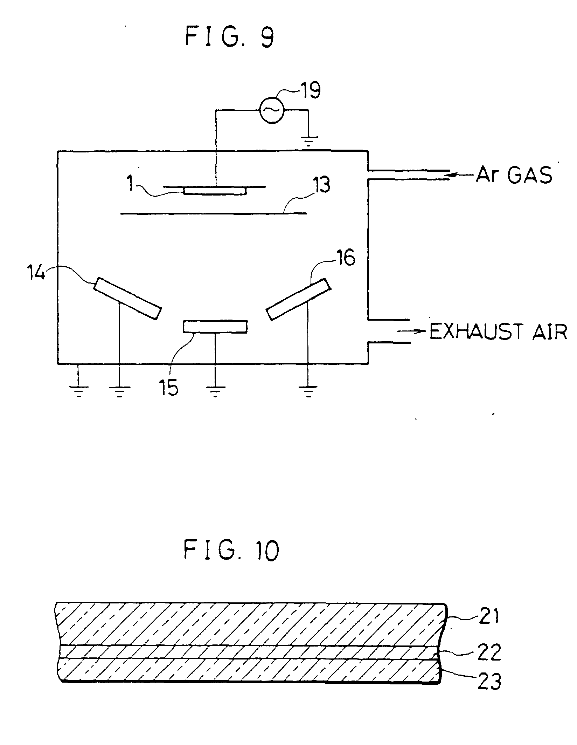

In more detail, as shown in Fig. 9, a high frequency power supply 19 is connected to the substrate 1 having a property that light can be transmitted therethrough, and the reverse sputtering (etching) operation is carried out in the chamber 11 wherein Ar gas (discharge gas) was introduced. Here, other targets 14 through 16 are connected to ground. As a result of the reverse sputtering operation, the film thickness of the first magnetic layer 3 is reduced from 50 nm to 40 nm. The sputtering conditions are as listed below: gas pressure of 9 mTorr, application power of 700 W, and reverse sputtering time of 5 minutes.

On the first magnetic layer 3, for example, Tb_{0.25}Fe_{0.65}Co_{0.10} (the second magnetic layer 4) with a thickness of 40 nm is formed by sputtering. The second magnetic layer 4 is formed in the same manner as the first magnetic layer 3. Except that the high frequency power supply is connected to the Tb_{0.25}Fe_{0.65}Co_{0.10} target 16, and the Tb_{0.18}Fe_{0.72}Co_{0.10} target 14 is connected to ground, the sputtering operation is carried out in the chamber 11 under the same conditions, and thus the detailed explanations thereof shall be omitted here.

On the second magnetic layer 4, for example, AℓN (protective film 5) with a thickness of 80 nm is formed by a sputtering operation. The protective film 5 is formed in the same manner as the dielectric film 2 under the same conditions, and thus the detailed explanations thereof shall be omitted.

Additionally, for convenience in the explanation, the high frequency power supplies 17 - 19 are separately provided in the present embodiment. However, the present invention is not limited to the above arrangement. For example, it may be arranged such that a single high frequency power supply is adopted, and the portions to be connected are selected by a switching circuit. Furthermore, DC current may be used in the sputtering operation.

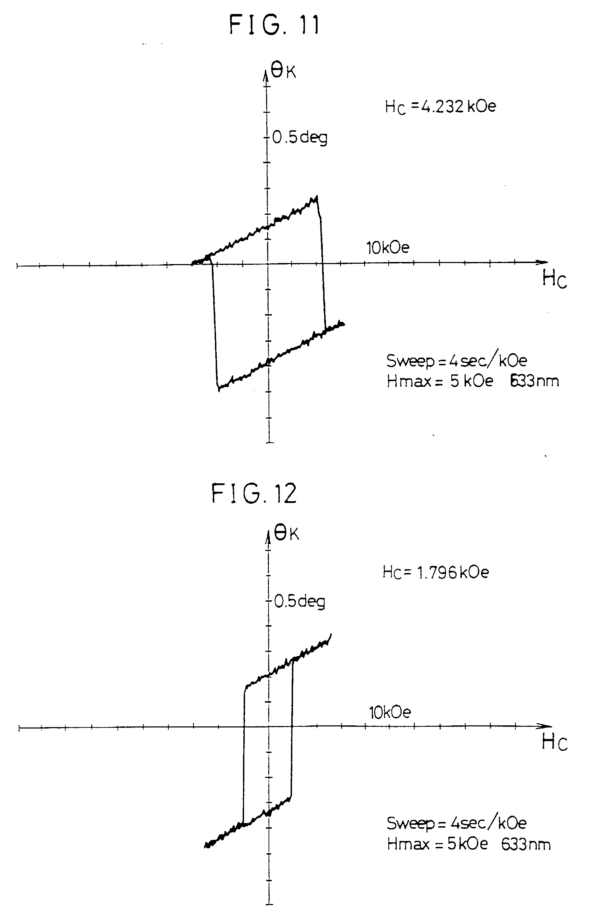

Fig. 6 is an explanatory view showing a coercive force Hc dependency on a magnetic Kerr rotation angle θₖ of the magneto-optical recording medium manufactured by the above method. As shown in Fig. 6, the measured value for the coercive force Hc of the magneto-optical recording medium manufactured through the method of the present embodiment was 8.516 kOe. The value for the coercive force can be estimated only by a magnetic wall energy stored in the magnetic wall formed on the interface. Thus, the size of the coercive force Hc will be evaluated with reference to Figs. 10 through 14.

Fig. 10 shows a measured sample having the following arrangement. For a magnetic layer 22, a single layer of Tb_{0.18}Fe_{0.72}Co_{0.10} or Tb_{0.25}Fe_{0.65}Co_{0.10} with a thickness of 40 nm (corresponding to the first magnetic layer 3 or the second magnetic layer 4) is formed on a glass substrate 21 (with the thickness of 0.5 mm) in the same device under the same conditions. Furthermore, a protective layer 23 made of AℓN with the thickness of 80 nm is formed.

Fig. 11 shows the coercive force Hc dependency on the magnetic Kerr rotation angle θₖ in the case where only the single layer of Tb_{0.18}Fe_{0.72}Co_{0.10} is formed for the magnetic layer 22. The measured value of the coercive force was 4.232 kOe.

Fig. 12 shows the coercive force Hc dependency on the magnetic Kerr rotation angle θₖ in the case where only the single layer of Tb_{0.25} Fe_{0.65}Co_{0.10} is formed for the magnetic layer 22. The measured value of the coercive force was 1.796 (kOe).

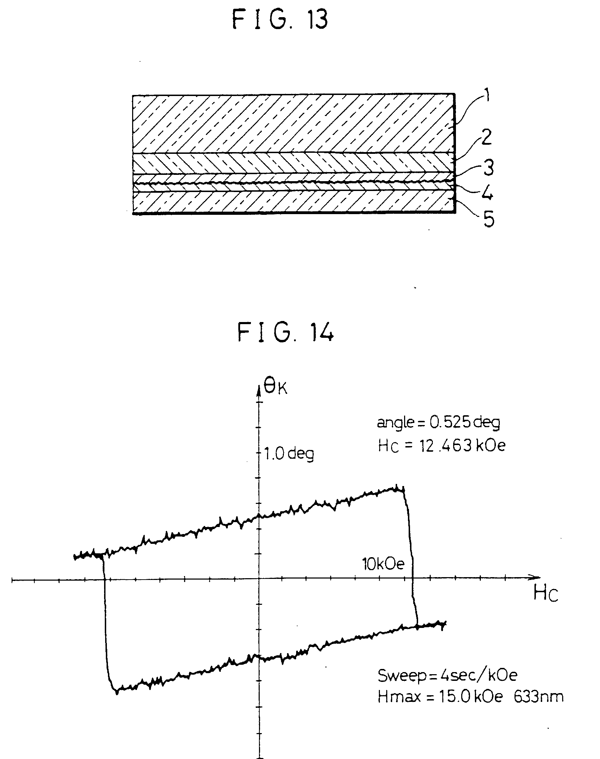

The magnetic layers having Kerr loops shown in Figs. 11 and 12 are respectively the first magnetic layer 3 and the second magnetic layer 4. For the comparative example, the second magnetic layer 4 was formed directly on the first magnetic layer 3 without carrying out the reverse sputtering operation on the first magnetic layer 3, thereby obtaining the magneto-optical recording medium having a configuration shown in Fig. 13. Since the reverse sputtering operation was not carried out, the interface was made coarse as shown in the solid wave line of Fig. 13.

Fig. 14 shows the Kerr loop of the magneto-optical recording medium having the configuration of Fig. 13. As shown in Fig. 14, the measured value of the coercive force Hc was 12. 463 (kOe).

As is clear from Figs. 11 through 14, when the first magnetic layer 3 and the second magnetic layer 4 are laminated without carrying out the reverse sputtering operation, the coercive force Hc increases by the lamination of the layers, and the size of the coercive force cannot be estimated. This is because the magnetic wall energy is not the only factor increasing the coercive force. Other factors also greatly affect an increase in the coercive force.

On the other hand, in the present embodiment, the second magnetic layer 4 is formed on the first magnetic layer 3 after carrying out the reverse sputtering operation on the first magnetic layer 3. As shown in Fig. 6, the coercive force Hc of 8.516 kOe was obtained which is 4.3 kOe greater than the single coercive force 4.232 kOe of the first magnetic layer 3. This increase in the coercive force Hc can be estimated from the magnetic wall energy when the first and second magnetic layers 3 and 4 are laminated after carrying out the reverse sputtering operation on the magnetic layer 3. Namely, in the present invention, the increase in the coercive force Hc is determined only by the energy stored in the magnetic wall formed on the interface.

In the present invention, the manufacturing method of the magneto-optical recording medium layer composed of the magnetic layers with a double-layered structure. However, the present invention is not limited to the above. For example, the manufacturing method of the present invention is also applicable to the magneto-optical recording medium composed of the magnetic layer with a three or more than three-layered structure. As to the material for the first and second magnetic layers 3 and 4, Tb_{0.18}Fe_{0.72}Co_{0.10} and Tb_{0.25}Fe_{0.65}Co_{0.10} have been employed. However, the present invention is not limited to the above, and any exchange coupled magnetic substances may be used.

As described, the method for manufacturing the magneto-optical recording medium in accordance with the present invention includes the step for forming the magnetic layer by a sputtering operation, the step for carrying out the reverse sputtering operation on the magnetic layer, and the step for forming the magnetic layer to be formed next on the surface of the magnetic layer whereon the reverse sputtering operation was carried out.

According to the manufacturing method, first the first magnetic layer is formed by a sputtering operation. Then, the reverse sputtering operation is carried out on the contacting face of the first magnetic layer before forming the second magnetic layer on the first magnetic layer. As a result of the reverse sputtering operation, the surface of the first magnetic layer whereon the second magnetic layer is to be formed is etched. Thereafter, the second magnetic layer is formed on the surface of the first magnetic layer, thereby obtaining the magneto-optical recording medium. After forming the second magnetic layer, the above process may be repeated according to the number of the magnetic layers so as to obtain the magneto-optical recording medium as desired. When carrying out the overwriting operation on the above magneto-optical recording medium, since the reverse sputtering operation was carried out on the surface of the first magnetic layer, the transfer of the magnetization from the second magnetic layer to the first magnetic layer can be made smoother.

Moreover, the magnetic wall energy stored in the interface between the first magnetic layer and the second magnetic layer is the only factor increasing the coercive force of the first and second magnetic layers being laminated. This enables the magneto-optical recording medium for overwriting through light intensity modulation wherein a plurality of magnetic layers are laminated to be numerically designed. As a result, the improvement in the quality of the magneto-optical recording medium and the reduction in its entire cost can be achieved. Namely, the improvement in the quality of the magneto-optical recording medium which satisfies the condition |A₁·K₁ - A₂·K₂| ≤ 0.063 (erg²/cm⁴) and the reduction in its entire cost can be achieved.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A magneto-optical recording medium having a recording layer comprising first and second magnetic layers, satisfying a condition of |A₁·K₁ - A₂·K₂| ≤ 0.063 (erg²/cm⁴) wherein A₁, K₁, A₂, and K₂ respectively represent an exchange constant of the first magnetic layer, a perpendicular magnetic anisotropy of the first magnetic layer, an exchange constant of the second magnetic layer, and a perpendicular magnetic anisotropy of the second magnetic layer.

2. The magneto-optical recording medium as set forth in claim 1, wherein said first and second magnetic layers satisfy the condition of |A₁·K₁ - A₂·K₂| ≤ 0.060.

3. The magneto-optical recording medium as set forth in claim 1 or claim 2, wherein said first and second magnetic layers are made of TbFeCo.

4. The magneto-optical recording medium as set forth in claim 3, wherein respective composition of TbFeCo for said first magnetic layer and for said second magnetic layer are Tb₁₈Fe₇₇Co₅. and Tb₂₅Fe₆₁Co₁₄.

5. The magneto-optical recording medium as set forth in claim 1, wherein a dielectric layer having a property that light can be transmitted therethrough, said recording layer, and a protective layer are laminated in this order on a substrate having the property that light can be transmitted therethrough.

6. The magneto-optical recording medium as set forth in claim 5, wherein a coating layer made of a resin of an acrylate family is formed on said protective layer.

## Patentansprüche

1. Magnetooptisches Aufzeichnungsmedium mit einer Aufzeichnungsschicht mit einer ersten und einer zweiten magnetischen Schicht, wobei die Bedingung |A₁ · K₁ - A₂ · K₂| ≤ 0,063 (erg²/cm⁴) gilt, wobei A₁, K₁, A₂ und K₂ die Austauschkonstante der ersten magnetischen Schicht, die rechtwinklige magnetische Anisotropie der ersten magnetischen Schicht, die Austauschkonstante der zweiten magnetischen Schicht bzw. die rechtwinklige magnetische Anisotropie der zweiten magnetischen Schicht repräsentieren.

2. Magnetooptisches Aufzeichnungsmedium nach Anspruch 1, bei dem die erste und zweite magnetische Schicht der Bedingung |A₁ · K₁ - A₂ · K₂| ≤ 0,060 genügen.

3. Magnetooptisches Aufzeichnungsmedium nach Anspruch 1 oder Anspruch 2, bei dem die erste und die zweite magnetische Schicht aus TbFeCo bestehen.

4. Magnetooptisches Aufzeichnungsmedium nach Anspruch 3, bei dem die jeweilige TbFeCo-Zusammensetzung der ersten magnetischen Schicht und der zweiten magnetischen Schicht Tb₁₈Fe₇₇Co₅ bzw. Tb₂₅Fe₆₁Co₁₄ ist.

5. Magnetooptisches Aufzeichnungsmedium nach Anspruch 1, bei dem eine dielektrische Schicht mit der Eigenschaft, dass Licht durch sie hindurchgestrahlt werden kann, die Aufzeichnungsschicht und eine Schutzschicht in dieser Reihenfolge auf ein Substrat mit der Eigenschaft, dass Licht durch es hindurchgestrahlt werden kann, auflaminiert sind.

6. Magnetooptisches Aufzeichnungsmedium nach Anspruch 5, bei dem eine Überzugsschicht aus einem Harz einer Acrylatfamilie auf der Schutzschicht ausgebildet ist.

## Revendications

1. Support d'enregistrement magnéto-optique ayant une couche d'enregistrement comprenant des première et seconde couches magnétiques, satisfaisant une condition |A₁.K₁ - A₂.K₂| ≤ 0,063 (erg²/cm⁴) dans laquelle A₁, K₁, A₂ et K₂ représentent respectivement une constante d'échange de la première couche magnétique, une anisotropie magnétique perpendiculaire de la première couche magnétique, une constante d'échange de la seconde couche magnétique et une anisotropie magnétique perpendiculaire de la seconde couche magnétique.

2. Support d'enregistrement magnéto-optique selon la revendication 1, dans lequel lesdites première et seconde couches magnétiques satisfont la condition |A₁.K₁ - A₂.K₂| ≤ 0,060.

3. Support d'enregistrement magnéto-optique selon la revendication 1 ou 2, dans lequel lesdites première et seconde couches magnétiques sont constituées de TbFeCo.

4. Support d'enregistrement magnéto-optique selon la revendication 3, dans lequel des compositions respectives du TbFeCo pour ladite première couche magnétique et pour ladite seconde couche magnétique sont Tb₁₈Fe₇₇Co₅ et Tb₂₅Fe₆₁Co₁₄.

5. Support d'enregistrement magnéto-optique selon la revendication 1, dans lequel un couche de diélectrique ayant une propriété consistant en ce qu'elle peut transmettre la lumière, ladite couche d'enregistrement, et une couche protectrice sont stratifiées dans cet ordre sur un substrat ayant la propriété consistant en ce qu'il peut transmettre la lumière.

6. Support d'enregistrement magnéto-optique selon la revendication 5, dans lequel une couche de revêtement constituée d'une résine d'une famille d'acrylates est formée sur ladite couche protectrice.
